# EUROPÄISCHE PATENTSCHRIFT

(11) **EP 2 965 928 B1**
(45) Veröffentlichungstag und Bekanntmachung des Hinweises auf die Patenterteilung: **05.07.2017**
(21) Anmeldenummer: 15171370.8
(22) Anmeldetag: 30.05.2011
(51) Int. Cl.: B60G 3/01, B60G 11/30

(54) **EINZELRADAUFHÄNGUNG FÜR EIN GEFEDERTES, LENKBARES RAD**
INDEPENDENT WHEEL SUSPENSION FOR A SPRING-MOUNTED STEERABLE WHEEL
SUSPENSION DE ROUE INDIVIDUELLE POUR UNE ROUE DIRECTRICE À SUSPENSION

(30) Priorität: 01.06.2010 DE 102010022313
(43) Veröffentlichungstag der Anmeldung: 13.01.2016
(62) Teilanmeldung aus: 11723046.6
(73) Patentinhaber: Horsch Maschinen GmbH, 92421 Schwandorf (DE)
(72) Erfinder: HORSCH, Michael, 92421 Schwandorf (DE)
(74) Vertreter: Benninger, Johannes

(56) Entgegenhaltungen:
- EP-B1- 1 685 988
- US-A1- 2002 053 795
- US-A1- 2002 109 400
- US-A1- 2006 150 606
- US-B1- 6 199 769

## Beschreibung

Die vorliegende Erfindung betrifft eine Einzelradaufhängung für ein lenkbares Rad eines Fahrzeuges mit den Merkmalen des unabhängigen Anspruchs 1.

Herkömmliche landwirtschaftliche Fahrzeuge sind normalerweise mit einfachen und robusten Starrachsen ausgestattet, wobei die Vorderachsen zur Verbesserung der Geländegängigkeit meist über ein Pendelgelenk verfügen, während die Hinterachsen oftmals aus Gründen der Traktionsoptimierung auf jede Federung verzichten müssen. Für manche Einsatzfälle ist es jedoch sinnvoll, die Fahrwerke mit Federungssystemen auszustatten, auch aus Gründen der Bodenschonung. So sind Einzelradaufhängungen für landwirtschaftliche Fahrzeuge aus dem Stand der Technik bekannt, die gegenüber Starrachsen den Vorteil bieten, dass keine gegenseitige Beeinflussung der Federung auf beiden Seiten des Fahrzeugs erfolgt. So sind Einzelradaufhängungen bspw. als McPherson-Federbein, als Schwinge oder als Raumlenkerachsen bekannt.

Die DE 8404619 U1 offenbart eine solche Einzelradaufhängung, bei der ein Rad über einen Schwingarm, der an einem Hydraulikzylinder angeordnet ist, federnd gelagert ist, so dass eine lineare Bewegung des Rades in ein Moment umgewandelt wird. Hierfür sind zusätzliche Mittel nötig, woraus zusätzliche Kosten und ein erhöhter Platzbedarf resultieren können. Weiter können keine Lenkung des Rades und kein Antrieb des Rades erfolgen.

Aus der DE 196 39 777 A1 ist weiterhin eine Achsaufhängung eines landwirtschaftlichen Fahrzeuges bekannt, bei dem ein lenkbares Rad mit einer Luftfederung ausgestattet ist. Auf diese Weise ist eine Radaufhängung geschaffen, bei der vertikale Federbewegungen einer Lenkachse über einen Luftfederbalg gefedert und/oder gedämpft sind.

Die EP 1 685 988 B beschreibt ein Federungssystem für ein landwirtschaftliches Fahrzeug, das über lenkbare Einzelradaufhängungen verfügt. An einem um eine vertikale Achse drehbaren Stützrohr ist ein Motorgehäuse eines Radnabenmotors o. dgl. angeordnet. Ein oberes Ende des zum Zwecke der Lenkung drehbaren Stützrohres ist mit einem Luftfederbalg gekoppelt, so dass der gesamten Radaufhängung ein begrenzter Federweg zur Verfügung gestellt ist.

Aus der US 2006/0150606 ist eine lenkbare Achse für ein Fahrzeug bekannt. Die lenkbare Achse steht mit einer Aufhängung in Verbindung, welche ein Kniegelenk stützt. Ein Arm ist vorgesehen, welcher geschwenkt werden kann und mit einem Achszapfen in Verbindung steht. Mittels einer Drehbewegung des Armes kann eine Baugruppe für ein Rad geschwenkt werden.

Aus der US 6,199,769 B1 ist eine landwirtschaftliche Feldspritze bekannt. Die Feldspritze besitzt ein hinteres angetriebenes Radpaar sowie ein Paar vorderer Räder, über welche die Feldspritze gelenkt werden kann. Das hintere angetriebene Radpaar ist federnd gelagert.

Aus der US 2002/0109400 A1 ist ein Federungssystem für einen Traktor bekannt. Das System besitzt einen Federungszylinder, welcher mit verschiedenen Druckniveaus beaufschlagt werden kann. Der Federungszylinder steht mit einem Reservoir in Verbindung.

Weiter offenbart die EP 1 685 988 B1 ein Federungssystem für ein landwirtschaftliches Fahrzeug. Das Federungssystem besitzt ein Stützrohr, welches axial verschiebbar sowie drehbar gelagert ist. Am unteren Ende des Stützrohes ist eine Radaufhängung befestigt. Um das Stützrohr federnd zu lagern, ist zwischen dem Stützrohr und einer Halterung ein Federungskörper eingebracht.

Aus der US 2002/0053795 A1 ist eine Radaufhängung bekannt. Die Radaufhängung verfügt über eine vertikale Achse, die an einen Federbalg gekoppelt ist. Weiter sind aus Gummi gebildete Dämpfungselemente vorgesehen, um ein jeweiliges Rad federnd zu lagern.

Ein vorrangiges Ziel der Erfindung besteht darin, eine verbesserte Einzelradaufhängung eines gelenkten und/oder angetriebenen Rades mit Federsystem zur Verfügung zu stellen. Diese Einzelradaufhängung soll möglichst stabil sein, große Federwege zur Verfügung stellen, mit einer einfach funktionierenden Dämpfung koppelbar und möglichst kompakt aufgebaut sein.

Dieses Ziel der Erfindung wird mit dem Gegenstand des unabhängigen Patentanspruchs 1 erreicht. Merkmale vorteilhafter Weiterbildungen der Erfindung ergeben sich aus den abhängigen Ansprüchen. So schlägt die vorliegende Erfindung zur Erreichung des Ziels eine Einzelradaufhängung für ein lenkbares Rad eines Fahrzeuges, insbesondere eines landwirtschaftlichen Zug-, Transport- oder Spezialfahrzeuges vor, bei dem eine Lenksäule über eine Gabelbrücke mit einer in ungefähr vertikaler Richtung beweglichen Linearführung zusammenwirkt. Dabei stellt die Gabelbrücke eine um eine ungefähr vertikal verlaufende Drehachse schwenkbare Lenkverbindung zu einem Fahrzeugrahmen her. Zudem ist die Linearführung mit einem fluidischen Feder- und/oder Dämpfungselement gekoppelt, das einen tragenden Bestandteil der Gabelbrücke bildet. So können vorzugsweise zumindest Teile des fluidischen Feder- und/oder Dämpfungselementes in die Lenksäule hineinreichen oder dort integriert sein. Auch kann das fluidische Feder- und/oder Dämpfungselement als integriertes Bauteil in der Lenksäule angeordnet sein, wobei die Lenksäule bspw. als Zylinder oder Hubzylinder für das fluidische Feder- und/oder Dämpfungselement ausgebildet sein kann.

Der besondere Vorteil einer solchen Anordnung mit der in die Lenksäule integrierten Federung und/oder Dämpfung liegt in den sehr großen Federwegen, die bei Bedarf dadurch realisiert werden können. Auch entfallen die Einschränkungen hinsichtlich des Federwegs wie auch der Koppelungsmöglichkeit mit effektiven Dämpfungselementen, wie sie bei den aus dem Stand der Technik bekannten Luftfederbalgsystemen existieren. Während die herkömmlicherweise verwendeten Luftfederbälge einerseits einen sehr beschränkten Federweg bieten und dennoch relativ voluminös bauen und andererseits mit zusätzlichen Dämpfungselementen kombiniert werden müssen, soll auch eine Raddämpfung ermöglicht sein, bietet die erfindungsgemäße Radaufhängung die Möglichkeit, durch teilweise oder vollständige Integrierbarkeit der Federungssysteme in eine Lenksäule sehr große Federwege bei kleinstem Einbauraum zu realisieren.

Eine bevorzugte Variante der erfindungsgemäßen Einzelradaufhängung kann zudem vorsehen, dass die Linearführung mit einem Antriebsmotor zum Antrieb des lenkbaren Rades versehen ist. Auf diese Weise können wahlweise die beiden Räder einer Achse mit hydrostatischen oder elektrischen Radnabenmotoren o. dgl. versehen sein. Wahlweise können auch alle Räder eines Fahrzeuges mit solchen Antriebsmotoren an den Aufhängungen versehen sein. Die besonders kompakte Bauweise und die realisierbaren langen Federwege können dazu beitragen, dass eine sehr große Bodenfreiheit des Fahrzeuges realisierbar wird, was bspw. für Pflegearbeiten mit relativ hohem Pflanzenbestand oder für den Einsatz in Sonderkulturen sehr vorteilhaft sein kann.

Die Lenkbarkeit der Achsen kann bspw. durch entsprechende Lenkhebel realisiert sein, die wahlweise an der Lenksäule jeder Radaufhängung oder an anderen Aufhängungsteilen angreifen. So können die erforderlichen Lenkkräfte durch Hebelanlenkungen oberhalb der Achsschenkel oder auf herkömmliche Weise über eine Anlenkung an den Achsschenkeln selbst erfolgen. Wahlweise kann bei einer Variante der erfindungsgemäßen Einzelradaufhängung die Lenksäule selbst zur Übertragung eines Drehmoments auf die Gabelbrücke ausgebildet sein.

Die Linearführung kann bspw. durch einen Schlitten o. dgl. gebildet sein, wobei der Schlitten und die mit der Lenksäule gekoppelte Gabelbrücke mindestens jeweils ein lineares Führungselement aufweisen, durch welche jeweils mindestens ein Führungsstab verläuft, so dass der Schlitten und die Gabelbrücke relativ zueinander in linearer Richtung zueinander bewegbar sind. Diese Aufhängung sorgt für die erforderliche Stabilität, da die Schlittenführung so ausgebildet sein kann, dass die Führungsstäbe bzw. der wenigstens eine Führungsstab über eine ausreichende Länge umfasst wird, wodurch günstige Hebelverhältnisse entstehen. So kann die Lenksäule bspw. an ihrer Unterseite in eine Gabelbrücke o. dgl. münden, an der zwei parallel zur Lenksäule nach unten reichende Führungsstangen oder Stäbe verankert sind, die wiederum den parallel zur Lenksäule und entlang der Führungsstangen beweglichen Schlitten aufnehmen und in Längsrichtung führen, der die gesamten Randanschluss inkl. des Radnabenmotors aufnimmt und trägt.

Eine alternative Ausführungsvariante der erfindungsgemäßen Einzelradaufhängung kann vorsehen, dass der Zylinder bzw. das Feder- und/oder Dämpfungselement, das mit der Lenksäule gekoppelt bzw. dort zumindest teilweise integriert ist, einen Federbalg aufweist, der mit einem Stempel des Schlittens federnd verbunden ist. Dieser Federbalg kann bspw. als zusätzliches Federelement zwischen einer Gabelbrücke oder einem unteren Anschlagelement der Lenksäule und einem tragenden Element des verschiebbaren Schlittens angeordnet sein und wahlweise als federndes Element und/oder als Anschlagpuffer zur Begrenzung des maximalen Einfederwegs o. dgl. ausgebildet sein.

Weiterhin kann das Feder- und/oder Dämpfungselement ein oder mehrere Druckreservoirs mit Anschlüssen aufweisen, wobei die Druckreservoirs vorzugsweise über Leitungssysteme fluidisch mit dem Zylinder bzw. dem Feder- und/oder Dämpfungselement der Lenksäule verbunden sind. Aufgrund der kompakten Bauweise der gesamten Radaufhängung können diese Druckreservoirs bzw. das mindestens eine Druckreservoir bspw. als kleine Tanks ausgebildet sein, die zusammen mit dem Radnabenmotor am Schlitten verankert sind und auf diese Weise in der Radschüssel des am Radnabenmotor verankerten Fahrzeugrades Platz finden, ohne dass dadurch die Bodenfreiheit oder die Freigängigkeit zwischen den Achsen in irgendeiner Weise betroffen oder beeinträchtigt ist.

Schließlich umfasst die Erfindung ein landwirtschaftliches Nutzfahrzeug mit mindestens einer Einzelradaufhängung gemäß einer der zuvor beschriebenen Ausführungsvarianten, einen Fahrzeugrahmen, an dem die mindestens eine, typischerweise jedoch mindestens zwei Einzelradaufhängungen angeordnet sind. Das landwirtschaftliche Nutzfahrzeug kann bspw. als Zugfahrzeug ausgebildet sein und mindestens eine oder mehrere am Fahrzeugrahmen befestigte Bodenbearbeitungsvorrichtungen aufweisen. Das Nutzfahrzeug kann jedoch auch als Mehrzweck- oder Kombinationsfahrzeug oder als Spezialfahrzeug ausgebildet sein und eine Aufsattelvorrichtung o. dgl. mit einem Spritzmitteltank oder anderen landwirtschaftlichen Funktionsbauteilen aufweisen.

Die erfindungsgemäße Einzelradaufhängung dient der gefederten und/oder gedämpften Radführung für ein lenkbares Rad. Die Einzelradaufhängung kann beispielsweise für ein- zwei- oder mehrspurige Nutzfahrzeuge vorgesehen sein. Sind mehrere erfindungsgemäß beanspruchte Einzelradaufhängungen für ein Nutzfahrzeug vorgesehen, so kann die Drehbewegung einer oder mehrerer Einzelradaufhängungen gleichzeitig oder nacheinander und hinsichtlich der Drehbewegung homogen oder inhomogen erfolgen. Erfindungsgemäß kann zum Antrieb des Rades ein Motor vorgesehen sein. Der Motor kann an der Linearführung angeordnet sein und das lenkbare Rad antreiben. Für die gewählte Leistung des verwendeten Motors steht dem Fachmann ein breites Spektrum zur Verfügung, so dass er die Leistung optimiert im Hinblick auf den Verwendungszweck der beanspruchten Einzelradaufhängung wählen kann. Der Motor kann beispielsweise als Radnabenmotor, als ein Getriebe mit Ölmotor oder als eine elektrische Antriebseinheit ausgebildet sein. Der Motor ist über eine in annähernd vertikale Richtung bewegliche Linearführung mit einer Gabelbrücke verbunden. Die Linearführung kann beispielsweise über eine Schienenführung ausgestaltet sein. Die drehgelenkige Verbindung kann, je nach gewählter Ausführungsform, auch mindestens ein Kugellager oder ähnliche Komponenten beinhalten. Die Gabelbrücke stellt eine um eine vertikale Drehachse schwenkbare Lenkverbindung zu einem Fahrzeugrahmen her. Ferner ist die Linearführung mit einem fluidischen Feder- und/oder Dämpfungselement gekoppelt. Bei dem fluidischen Feder- und/oder Dämpfungselement kann es sich beispielsweise um ein hydraulisches und/oder pneumatisches Federsystem handeln. Das Feder- und/oder Dämpfungselement bildet einen tragenden Bestandteil der Gabelbrücke. Hierbei kann die Gabelbrücke ein- oder mehrere Komponenten des Feder- und/oder Dämpfungselementes aufweisen. Beispielsweise kann eine Lenksäule, angeordnet an der Gabelbrücke, vorhanden sein. Bei gewünschter Drehbewegung der Einzelradaufhängung kann eine Drehmomentübertragung von der Lenksäule auf die Gabelbrücke erfolgen. Die Lenksäule kann dergestalt sein, dass sie zudem als Zylinder eines Feder- und/oder Dämpfungselementes agiert.

In einer bevorzugten Ausführungsform der vorliegenden Erfindung kann der Motor an einem Schlitten angeordnet sein. Beispielsweise kann der Motor über Schraub und/oder Klemmverbindungen und/oder weitere zusätzliche Fixierelemente am Schlitten angeordnet sein. Der Schlitten kann ein lineares Führungselement aufweisen, durch welche ein Führungsstab verläuft. Das lineare Führungselement kann beispielsweise als Bohrung bzw. als Führungskanal ausgebildet sein. In dieser Ausführungsform kann der gewählte Durchmesser des Führungselementes der Gabelbrücke vom gewählten Durchmesser des Führungselementes des Schlittens abweichen. Beispielsweise kann der gewählte Durchmesser des Führungselementes der Gabelbrücke derart gewählt werden, dass dieser als Presspassung für den Führungsstab ausgebildet ist, so dass der Führungsstab fest in dem Führungselement der Gabelbrücke angeordnet ist. Hierdurch können der Schlitten und die Gabelbrücke relativ in linearer Richtung zueinander bewegbar sein. In einer bevorzugten Ausführungsform ist die Relativbewegung derart, dass die Gabelbrücke eine Fixposition einnimmt und eine lineare Bewegung des Schlittens zum- oder weg von der Gabelbrücke erfolgt. In einer weiteren Ausführungsform der vorliegenden Erfindung weist der Zylinder einen Federbalg auf, der mit einem Stempel des Schlittens federnd verbunden ist. Der Federbalg ist vorzugsweise aus flexiblem Material gebildet. Der Stempel kann beispielsweise durch eine ebene Fläche gebildet sein, auf welcher der Federbalg aufliegen kann. Ferner kann das Dämpfungselemente ein- oder mehrere Druckreservoirs mit Anschlüssen aufweisen. Die Druckreservoirs können über Leitungssysteme fluidisch mit dem Zylinder verbunden sein. Die Druckreservoirs können in einer gewählten Ausführungsform als pneumatischer und/oder hydraulischer Zylinder ausgebildet sein. Durch eine Druckerhöhung der Druckreservoirs, welche beispielweise über die Anschlüsse erfolgt, kann die Federwirkung des Feder- und/oder Dämpfungselement beeinflusst und optimiert ausgestaltet werden.

Eine erfindungsgemäß beanspruchte Einzelradaufhängung eignet sich erfahrungsgemäß beispielsweise für landwirtschaftliche Nutzfahrzeuge, da hier unterschiedliche Bodenunebenheiten auftreten, die über Ausgestaltung mittels der beanspruchten Einzelradfederung optimiert gefedert bzw. gedämpft werden können. Weiter kann an einem landwirtschaftlichen Nutzfahrzeug eine Bodenbearbeitungsvorrichtung befestigt sein, wobei die Einzelradaufhängung dergestalt ist, dass sie die zusätzliche Last ohne Beschädigung tragen kann und die Dämpfung bzw. Federung selbst bei zusätzlicher Last gewährleistet bleibt. Die Bodenbearbeitungsvorrichtung kann beispielsweise ein Spritzgestänge sein. Hiervon abgesehen kommen auch weitere Bodenbearbeitungsvorrichtungen, wie beispielsweise Pflüge oder dergleichen in Betracht.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine erste Perspektivansicht einer Ausführungsform einer erfindungsgemäßen Einzelradaufhängung.
Fig. 2 zeigt eine weitere Perspektivansicht der Einzelradaufhängung gemäß Fig. 1.
Fig. 3 zeigt eine Perspektivansicht eines verschiebbaren Schlittens der Einzelradaufhängung.
Fig. 4 zeigt eine weitere Perspektivansicht eines Schlittens gemäß Fig. 3.
Fig. 5 zeigt eine perspektivische Schemadarstellung einer Ausführungsvariante eines landwirtschaftlichen Nutzfahrzeuges mit Einzelradaufhängungen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung ausgestaltet sein kann und stellen keine abschließende Begrenzung dar.

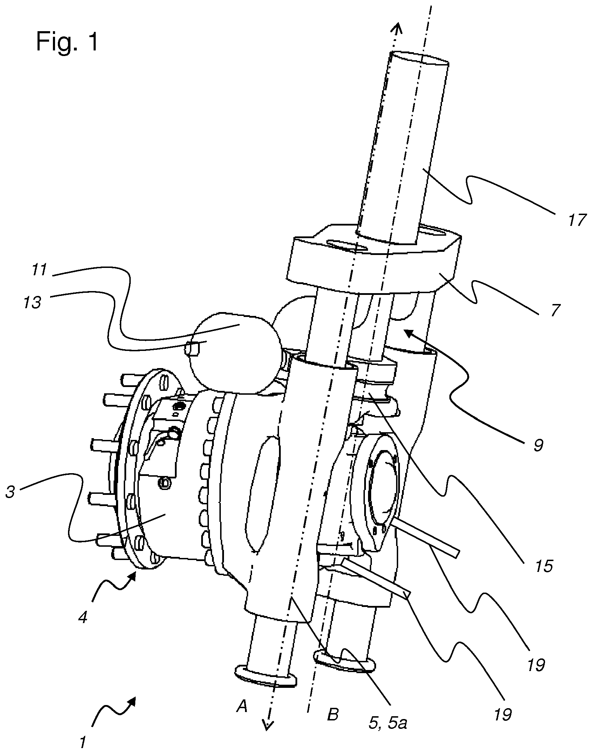

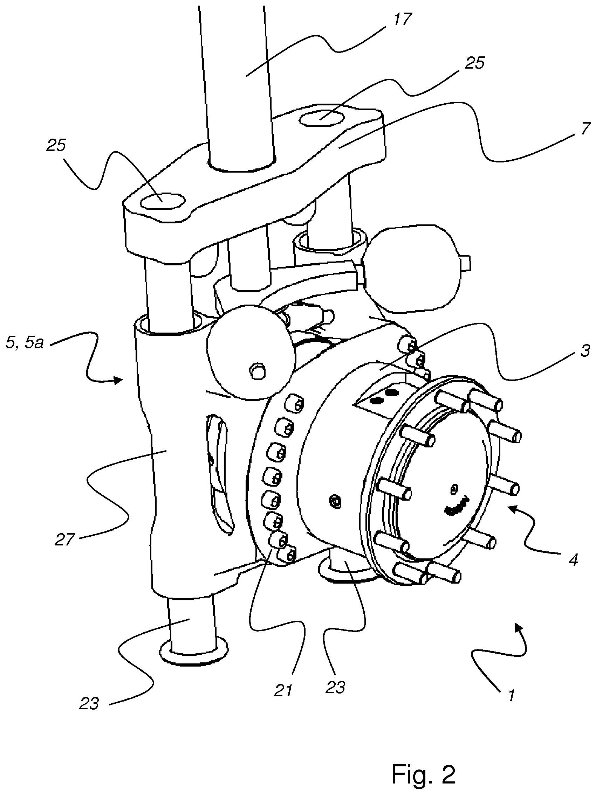

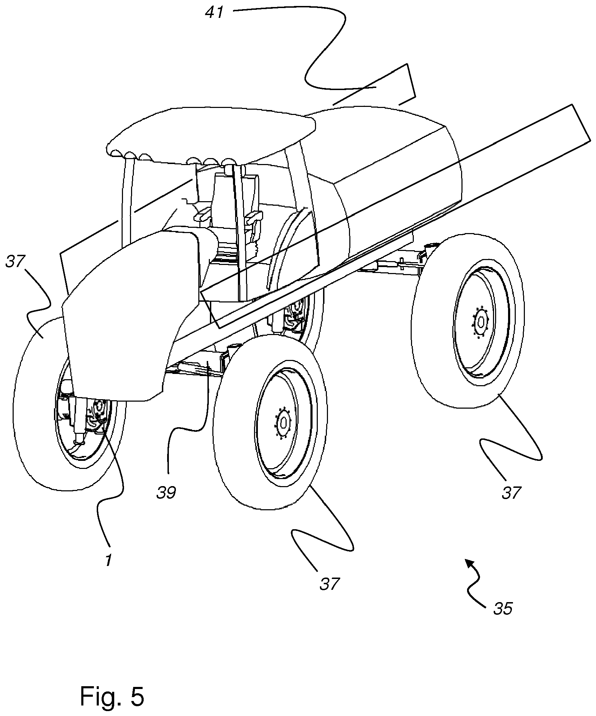

Die schematischen Perspektivdarstellungen der Fig. 1 und der Fig. 2 zeigen verschiedene Ansichten einer Ausführungsvariante einer erfindungsgemäßen Einzelradaufhängung 1, wie sie bspw. für landwirtschaftliche Nutzfahrzeuge (vgl. Fig. 5) eingesetzt werden kann. Die Einzelradaufhängung 1 umfasst einen Radnabenmotor 3 als Antrieb, der einen Radanschlussflansch 4 für ein angetriebenes Rad des Fahrzeugs aufweist. Auch können im Rahmen der vorliegenden Erfindung Ausführungsformen von Einzelradaufhängungen 1 vorhanden sein, die keinen Motor 3 aufweisen. Der Radnabenmotor 3 ist über eine in annähernd vertikaler Richtung A bewegliche Linearführung 5 mit einer Gabelbrücke 7 verbunden. Die im gezeigten Ausführungsbeispiel als mit einer Unterseite einer Lenksäule 17 verbundene Gabelbrücke 7 stellt eine um eine zumindest annäherungsweise vertikal verlaufende Drehachse B schwenkbare Lenkverbindung zu einem Fahrzeugrahmen (nicht dargestellt) her. Wahlweise kann die Lenkverbindung zum Fahrzeugrahmen auch an der Linearführung 5 angelenkt sein.

Die als vertikal beweglicher Schlitten ausgebildete Linearführung 5 ist mit einem fluidischen Feder- und/oder Dämpfungselement 9 gekoppelt. Das Dämpfungselement 9 umfasst vorliegend einen Dämpfungszylinder. Der Dämpfungszylinder ist in der gezeigten Ausführungsform zugleich als Lenksäule 17 ausgebildet oder dort integriert und kann mittels Drehmomentübertragung eine Drehbewegung der Gabelbrücke 7 veranlassen. Ferner kann das Dämpfungselement 9 einen Federbalg 15 umfassen, der mit der Linearführung 5 zumindest in Oberflächenkontakt steht, aber auch mit dieser verbunden sein kann. Die Linearführung 5 ist in der gezeigten Ausführungsform als Schlitten 5a ausgebildet. Das Dämpfungselement 9 kann, wie in der gezeigten Ausführungsform dargestellt, einen oder mehrere Druckausgleichsreservoirs 11 umfassen. Mittels der Anschlüsse 13 kann der Druck in den Druckausgleichsreservoirs 11 verändert werden und somit die Federwirkung des Dämpfungselementes 9 beeinflusst werden. Der Radnabenmotor 3 ist im gezeigten Ausführungsbeispiel hydraulisch bzw. als hydrostatischer Antrieb ausgebildet und weist daher Hydraulikanschlüsse 19 auf.

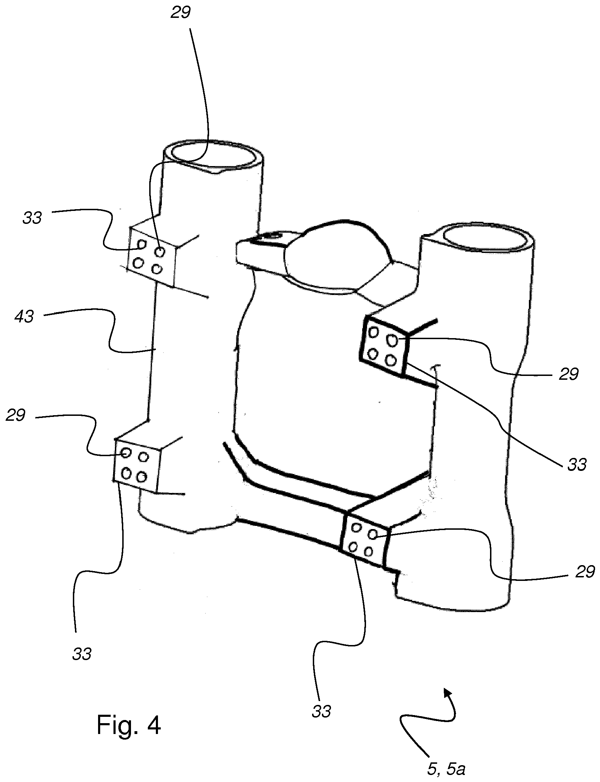

Die Perspektivdarstellung der Fig. 2 zeigt eine zweite Ansicht der Einzelradaufhängung 1 gemäß Fig. 1. Der Radnabenmotor 3 ist an einem Schlitten 5a angeordnet. Das Führungselement 25 der Gabelbrücke 7 ist in der gezeigten Ausführungsform als Bohrung ausgebildet, in welcher ein Führungsstab 23 mittels Presspassung fixiert ist. Weiter läuft der Führungsstab 23 durch ein Führungselement 27 der Linearführung 5 bzw. wird von dieser umfasst. Das Führungselement 27 ist vorliegend als Führungskanal ausgebildet. Die Linearführung 5, in der gezeigten Ausführungsform als Schlitten 5a ausgebildet, und die Gabelbrücke 7 sind somit in linearer Richtung relativ zueinander bewegbar. Der Radnabenmotor 3 ist über ein Befestigungselement 21 an der Linearführung 5 bzw. dem Schlitten 5a fixiert. Die Fixierung kann beispielsweise über Schraub- und/oder Steckverbindungen erfolgen, die in dafür vorgesehen Aussparungen 29 (nicht dargestellt, vgl. Fig. 4) und/oder Gewinde der Linearführung 5 greifen.

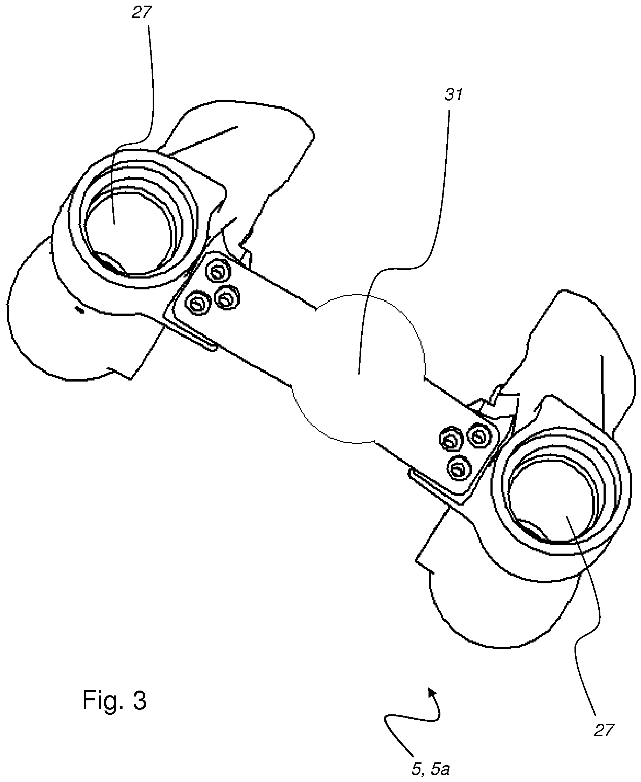

Die Fig. 3 zeigt eine Perspektivansicht des Schlittens 5a. Dieser Schlitten 5a weist Führungselemente 27 auf, die in der gezeigten Ausführungsform als Hohlkanäle ausgebildet sind. Über einen Stempel 31 steht der Schlitten 5a, wie in Fig. 1 gezeigt, in Oberflächenkontakt mit einer oder mehreren der Komponenten des Feder- und/oder Dämpfungselementes 9. Wie in der in Fig. 1 gezeigten Ausführungsform, kann dies beispielsweise der Federbalg 15 sein.

Die Fig. 4 zeigt eine weitere Perspektivansicht des Schlittens 5a. Der Schlitten 5a weist Befestigungsflächen 33 für ein Befestigungselement 21 (nicht dargestellt, siehe hierzu Fig. 2) auf. Die Befestigungsflächen 33 sind mit Aussparungen 29 versehen, die beispielsweise Gewinde zur Fixierung des Befestigungselementes 21 über Schraubverbindungen beinhalten können. Der Schlitten 5a kann in vordefinierten Bereichen eine Verjüngung 43 aufweisen.

Die perspektivische Darstellung der Fig. 5 zeigt eine Ausführungsform eines Nutzfahrzeuges 35 mit Einzelradaufhängungen 1. An jeweils einer Einzelradaufhängung 1 ist ein Rad 37 angeordnet. Die Einzelradaufhängungen sind an einem Rahmen 39 befestigt. Am Rahmen 39 ist weiterhin eine Bodenbearbeitungsvorrichtung, in diesem Fall ein Spritzgestänge 41 angeordnet.

Der besondere Vorteil einer solchen Anordnung mit der zumindest teilweise in die Lenksäule 17 integrierten Federung und/oder Dämpfung 9 liegt in den sehr großen Federwegen, die bei Bedarf durch die relativ lange und keinen Längenbeschränkungen unterliegende Lenksäule 17 realisiert werden können. Auch entfallen die Einschränkungen hinsichtlich des Federwegs wie auch der Koppelungsmöglichkeit mit effektiven Dämpfungselementen, wie sie bei den aus dem Stand der Technik bekannten Luftfederbalgsystemen existieren. Während die herkömmlicherweise verwendeten Luftfederbälge einerseits einen sehr beschränkten Federweg bieten und dennoch relativ voluminös bauen und andererseits mit zusätzlichen Dämpfungselementen kombiniert werden müssen, soll auch eine Raddämpfung ermöglicht sein, bietet die erfindungsgemäße Radaufhängung 1 die Möglichkeit, durch teilweise oder vollständige Integrierbarkeit der Federungssysteme 9 in eine Lenksäule 17 sehr große Federwege bei kleinstem Einbauraum zu realisieren.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Einzelradaufhängung
- 3: Antriebsmotor, Radnabenmotor
- 4: Radanschlussflansch
- 5: Linearführung
- 5a: Schlitten
- 7: Gabelbrücke
- 9: Feder und/oder Dämpfungselement
- 11: Druckausgleichsreservoir/Druckreservoir
- 13: Anschluss
- 15: Federbalg
- 17: Lenksäule
- 19: Hydraulikanschluss
- 21: Befestigungselement
- 23: Führungsstab
- 25: Führungselement Gabelbrücke
- 27: Führungselement Schlitten
- 29: Aussparung
- 31: Stempel
- 33: Befestigungsfläche
- 35: Fahrzeug
- 37: Rad
- 39: Rahmen
- 41: Spritzgestänge
- 43: Verjüngung
- A: vertikale Achse
- B: Drehachse

## Patentansprüche

1. Einzelradaufhängung (1) für ein lenkbares Rad (37) eines Fahrzeuges, insbesondere eines landwirtschaftlichen Zug-, Transport- oder Spezialfahrzeuges, mit einer Lenksäule (17), die über eine Gabelbrücke (7) mit einer in ungefähr vertikale Richtung (A) beweglichen Linearführung (5) zusammenwirkt, wobei die Gabelbrücke (7) eine um eine ungefähr vertikal verlaufende Drehachse (B) schwenkbare Lenkverbindung zu einem Fahrzeugrahmen (39) herstellt, und wobei die Linearführung (5) mit einem fluidischen Dämpfungselement (9) gekoppelt ist, das einen tragenden Bestandteil der Gabelbrücke (7) bildet, wobei
- das Dämpfungselement (9) einen Dämpfungszylinder umfasst, der als Lenksäule (17) ausgebildet ist und
- wobei das Dämpfungselement (9) ein oder mehrere Druckreservoirs (11) mit Anschlüssen (13) aufweist, wobei die Druckreservoirs (11) über Leitungssysteme fluidisch mit dem Dämpfungszylinder verbunden sind.

2. Einzelradaufhängung nach Anspruch 1, bei der die Linearführung (5) mit einem Antriebsmotor (3) zum Antrieb des lenkbaren Rades (37) versehen ist.

3. Einzelradaufhängung nach Anspruch 1 oder Anspruch 2, bei der die Linearführung (5) durch einen Schlitten (5a) gebildet ist, wobei der Schlitten (5a) und die Gabelbrücke (7) mindestens jeweils ein lineares Führungselement (25, 27) aufweisen, durch welche jeweils mindestens ein Führungsstab (23) verläuft, so dass der Schlitten (5a) und die Gabelbrücke (7) relativ in linearer Richtung (A) zueinander bewegbar sind.

4. Einzelradaufhängung nach Anspruch 3, bei welcher die ein oder mehreren Druckreservoirs (11) am Schlitten (5a) verankert sind.

5. Einzelradaufhängung nach einem der Ansprüche 1 bis 4, bei der die Lenksäule (17) zur Übertragung eines Drehmoments auf die Gabelbrücke (7) ausgebildet ist.

6. Einzelradaufhängung nach einem der Ansprüche 3 bis 5, bei welcher das Dämpfungselement (9) einen Federbalg (15) aufweist, der mit einem Stempel (31) des Schlittens (5a) federnd verbunden ist.

7. Landwirtschaftliches Nutzfahrzeug (35) mit mindestens einer Einzelradaufhängung (1) gemäß einem der Ansprüche 1 bis 6, einem Fahrzeugrahmen (39), an dem die mindestens eine Einzelradaufhängungen (1) angeordnet ist, und mindestens einer oder mehrerer am Fahrzeugrahmen befestigten Bodenbearbeitungs- oder Aufsattelvorrichtungen (41).

## Claims

1. An independent suspension (1) for a steerable wheel (37) of a vehicle, in particular of an agricultural towing vehicle, of a transport vehicle, or of a special vehicle, with a steering column (17) interacting by way of a triple clamp (7) with a linear guide (5), which is movable in an approximately vertical direction (A), wherein the triple clamp (7) establishes a steering connection to a vehicle chassis (39), the steering connection being pivotable about an approximately vertically running axis of rotation (B), and wherein the linear guide (5) is coupled with a fluidic damping element (9), which forms a load-bearing component of the triple clamp (7), wherein
- the damping element (9) comprises a damping cylinder formed as steering column (17), and
- wherein the damping element (9) has one or more pressure reservoirs (11) with ports (13), wherein the pressure reservoirs (11) are fluidically connected to the damping cylinder by way of duct systems.

2. The independent suspension as recited in claim 1, in which the linear guide (5) is provided with a drive motor (3) for driving the steerable wheel (37).

3. The independent suspension as recited in claim 1 or claim 2, in which the linear guide (5) is formed by a carriage (5a), wherein the carriage (5a) and the triple clamp (7) each have at least one linear guide element (25, 27), through which of each at least one guide bar (23) runs, such that the carriage (5a) and the triple clamp (7) are movable in a linear direction (A) relative toward each other.

4. The independent suspension as recited in claim 3, in which the one or more pressure reservoirs (11) are anchored to the carriage (5a).

5. The independent suspension as recited in one of the claims 1 to 4, in which the steering column (17) is formed for torque transmission to the triple clamp (7).

6. The independent suspension as recited in one of the claims 3 to 5, in which the damping element (9) has a spring bellows (15), which is springily connected to a punch (31) of the carriage (5a).

7. An agricultural utility vehicle (35) with at least one independent suspension (1) as recited in one of the claims 1 to 6, with a vehicle chassis (39), at which the at least one independent suspension (1) is arranged, and with at least one or more tillage devices or semi-mounted implements (41) attached to the vehicle chassis.

## Revendications

1. Suspension de roue indépendante (1) pour une roue dirigeable (37) d'un véhicule, notamment d'un véhicule agricole de traction, de transport ou spécialisé, muni d'une colonne de direction (17) qui coopère avec un dispositif de guidage linéaire (5) mobile approximativement dans le sens vertical (A) par le biais d'un té de fourche (7), ledit té de fourche (7) établissant une liaison de direction, articulable, avec un châssis de véhicule (39) autour d'un axe de rotation (B) approximativement vertical, et le dispositif de guidage linéaire (5) étant couplé à une pièce d'amortissement (9) à fluide, laquelle pièce d'amortissement constitue une composante porteuse du té de fourche (7),
- la pièce d'amortissement (9) comprenant un cylindre d'amortissement agencé sous la forme de colonne de direction (17) et
- la pièce d'amortissement (9) présentant un ou plusieurs réservoirs sous pression (11) à connecteurs (13), les réservoirs sous pression (11) étant reliés au cylindre d'amortissement par fluide passant par des dispositifs de conduites.

2. Suspension de roue indépendante selon la revendication 1, dans laquelle le dispositif de guidage linéaire (5) est pourvu d'un moteur d'entraînement (3) pour entraîner la roue dirigeable (37).

3. Suspension de roue indépendante selon la revendication 1 ou la revendication 2, dans laquelle le dispositif de guidage linéaire (5) est formé d'un chariot (5a), ledit chariot (5a) et le té de fourche (7) présentant chacun au moins une pièce de guidage linéaire (25, 27) au travers de laquelle passe respectivement au moins une barre de guidage (23), de telle sorte que le chariot (5a) et le té de fourche (7) sont mobiles l'un vers l'autre dans le sens linéaire (A).

4. Suspension de roue indépendante selon la revendication 3, dans laquelle l'un ou les plusieurs réservoirs à pression (11) sont solidarisés au chariot (5a).

5. Suspension de roue indépendante selon l'une des revendications 1 à 4, dans laquelle la colonne de direction (17) est agencée pour transmettre un couple de rotation au té de fourche (7).

6. Suspension de roue indépendante selon l'une des revendications 3 à 5, dans laquelle la pièce d'amortissement (9) présente un soufflet (15) relié de manière élastique à un poinçon (31) du chariot (5a).

7. Véhicule utilitaire agricole (35) doté d'au moins une suspension de roue indépendante (1) selon l'une des revendications 1 à 6, d'un châssis de véhicule (39) auquel est agencée la au moins une suspension de roue indépendante (1), et d'au moins un ou plusieurs dispositifs de travail du sol ou semi-porté (41) fixé au châssis de véhicule.
